Europäisches Patentamt

European Patent Office

Office européen des brevets

(19)

(11) EP 0 895 516 B1

(12) **EUROPÄISCHE PATENTSCHRIFT**

(45) Veröffentlichungstag und Bekanntmachung des Hinweises auf die Patenterteilung:
**24.11.1999 Patentblatt 1999/47**

(21) Anmeldenummer: **97915427.5**

(22) Anmeldetag: **25.03.1997**

(51) Int Cl.6: **C08G 18/10**, B01D 11/02

(86) Internationale Anmeldenummer:
**PCT/EP97/01498**

(87) Internationale Veröffentlichungsnummer:
**WO 97/40081 (30.10.1997 Gazette 1997/46)**

(54) **VERFAHREN ZUR ABTRENNUNG VON ORGANISCHEN MONOMEREN ODER HILFSSTOFFEN**

PROCESS FOR SEPARATING ORGANIC MONOMERS OR AUXILIARIES

PROCEDE POUR SEPARER DES MONOMERES ORGANIQUES OU DES AUXILIAIRES

(84) Benannte Vertragsstaaten:
**AT BE CH DE ES FR GB IT LI NL SE**

(30) Priorität: **23.04.1996 DE 19616046**

(43) Veröffentlichungstag der Anmeldung:
**10.02.1999 Patentblatt 1999/06**

(73) Patentinhaber: **Joachim Brimmer Ingenieurbüro Anlagenbau GmbH**
**28832 Achim (DE)**

(72) Erfinder:
• **BRIMMER, Joachim**
**D-28832 Achim (DE)**
• **SIRTL, Wolfgang**
**D-28209 Bremen (DE)**

(74) Vertreter: **Eisenführ, Speiser & Partner**
**Martinistrasse 24**
**28195 Bremen (DE)**

(56) Entgegenhaltungen:
**EP-A- 0 337 898**        **EP-A- 0 374 879**
**DE-A- 3 323 940**        **DE-A- 4 136 539**
**US-A- 4 306 058**

**Beschreibung**

Die Erfindung betrifft ein Verfahren zur Abtrennung von organischen Monomeren oder Hilfsstoffen, die bei der Synthese organischer Polymere verwendet werden oder an der Polymerisationsreaktion beteiligt sind, wobei die Monomere oder Hilfsstoffe aus dem durch die Synthese gewonnenen Prepolymer mittels verdichtetem Kohlendioxid als Lösungsmittel extrahiert werden, und wobei das Kohlendioxid in seinem thermodynamischen Zustand oberhalb seines kritischen Drucks und oberhalb seiner kritischen Temperatur verwendet wird.

Ein derartiges Verfahren ist aus US 4 871 460, DE-A-3 323 940 und EP-A-0 337 898 bekannt, welches dazu dient, die bei der Synthese eingesetzten, im Überschuß vorliegenden oder thermisch nicht umgesetzten Monomere sowie die bei der Synthese als Hilfestoffe verwendeten Additive, wie Lösungsmittel, Verdünnungsmittel, Stabilisatoren, Starter o.ä., aus dem Prepolymer, zu entfernen. Dabei wird das Kohlendioxyd in feuchtem und superkritischem Zustand zugeführt. Die auf diese Weise abgetrennten Monomere oder Hilfsstoffe werden auf diese Weise mit einem relativ hohen Wasseranteil gewonnen und sind daher für eine weitere Verwendung, beispielsweise für eine Rückführung in Produktionsprozeß, nicht brauchbar.

Aus den deutschen Patentschriften DE 38 36 093, DE 41 36 490 und DE 42 32 015 sowie der deutschen Offenlegungsschrift DE 24 14 391 A1 und den europäischen Patentschriften 0 464 483 und 0 340 584 sind ebenfalls verschiedene Verfahren zum Trennen von Monomeren oder/und Polymeren bekannt. Bei diesen bekannten Verfahren werden dem Prepolymer zum Neutralisieren weitere Hilfsstoffe zugesetzt, welche beispielsweise mit den zu neutralisierenden Monomeren im Prepolymer reagieren. Es handelt sich bei der Neutralisation mithin um ein chemisches Verfahren, bei dem das Reaktionsprodukt aus Monomeren den zur Neutralisation zugesetzten Hilfsstoffen im Prepolymer verbleibt.

Ein weiterer gemeinsamer Nachteil der bekannten Verfahren ist es, daß die abgetrennten Monomere verunreinigt sind und deshalb für weitere Synthesezwecke ungeeignet sind und daher kostenspielig entsorgt werden müssen.

Aufgabe der Erfindung ist es, das Verfahren der eingangs genannten Art derart weiterzubilden, daß die Monomere oder Hilfsstoffe im wesentlichen wasserfrei gewonnen werden, so daß eine weitere Verwendung der Monomere, insbesondere eine unmittelbare Rückführung der Monomere in den Produktionsprozeß, möglich ist.

Diese Aufgabe wird erfindungsgemäß gelöst durch ein Verfahren zur Abtrennung von organischen Monomeren oder Hilfsstoffen, die bei der Synthese organischer Polymere verwendet werden oder an der Polymerisationsreaktion beteiligt sind, wobei die Monomere oder Hilfsstoffe aus dem durch Synthese gewonnenen Prepolymer mittels verdichtetem Kohlendioxid als Lösungsmittel extrahiert werden, und wobei das Kohlendioxid in seinem thermodynamischen Zustand oberhalb seines kritischen Drucks und oberhalb seiner kritischen Temperatur verwendet wird. Das erfindungsgemäße Verfahren ist dadurch gekennzeichnet, daß das Kohlendioxid auf einen Wassergehalt unter 20 ppm getrocknet wird, bevor es mit dem Prepolymer zusammengebracht wird.

Mit Hilfe des erfindungsgemäßen Verfahrens kann der Restgehalt an Monomeren in dem gereinigten Prepolymer auf Werte unter 0,1% abgesenkt werden, so daß beispielsweise bei der Weiterverarbeitung der gereinigten Prepolymere keine besonderen Schutzmaßnahmen wegen der enthaltenen Monomere notwendig sind. Außerdem fallen die abgetrennten Monomere aufgrund der Verwendung von trockenem $CO_2$ mit einer großen Reinheit beispielsweise von bis zu 99,8% an, können somit für die Synthese wieder eingesetzt werden und brauchen nicht aufwendig entsorgt zu werden. Auch das trockene Kohlendioxid kann zur weiteren Extraktion zurückgeführt werden. Dies ermöglicht einen geschlossenen Extraktionskreislauf, bei dem keine Emissionen freigesetzt werden. Auch brauchen keine zusätzlichen Chemikalien verwendet zu werden. Hinzu kommt, daß die Schutzgaswirkung des Kohlendioxids insbesondere auch beim Abfüllen des gereinigten Prepolymeres ausgenutzt werden kann. Die Beeinträchtigung des Prepolymeres durch Sauerstoff oder Wasser kann auf einfache Art und Weise verhindert werden. Insgesamt ergibt sich eine erheblich verbesserte Produktqualität bei gleichzeitigem, vollständigem Recycling der eingesetzten Rohstoffe, Monomere oder Hilfsstoffe.

Zur Extraktion wird das verdichtete und getrocknete Kohlendioxid mit dem Prepolymer in Kontakt gebracht. Die Monomere oder Hilfsstoffe werden dann von dem Kohlendioxid aus dem Prepolymer herausgelöst und lösen sich in dem Kohlendioxid. Der Gehalt an Monomeren oder Hilfsstoffen in dem Prepolymer wird auf diese Weise verringert.

Zwar ist das Verfahren der Kohlendioxid-Hochdruckextraktion für die Gewinnung von Naturstoffextrakten bereits bekannt (DE-PS 21 27 618, DE-PS 21 27 611 und DE-PS 43 35 321). Die bei diesen Anwendungen der Kohlendioxidhochdruckextraktion gewonnenen Erfahrungen ließen aber eine Eignung des Verfahrens für das Abtrennen von organischen Monomeren oder Hilfsstoffen, die bei einer Synthese organischer Polymere verwendet werden oder an der Polymerisationsreaktion beteiligt sind, aus dem Prepolymer der Synthese nicht geeignet erscheinen. Die bisherigen Anwendungen haben nämlich gezeigt, daß Kohlendioxid ein geeignetes Lösungsmittel für lipophile Stoffe darstellt, während hydrophile, polare Stoffe oder Stoffklassen in Kohlendioxid unlöslich sind.

Dies zeigt sich deutlich am Beispiel einer Hopfenextraktion: Mittels Kohlendioxid-Hochdruckextraktion werden die lipophilen Inhaltsstoffe als Gesamtextrakt gewonnen, während die hydrophilen, polaren Stoffe (Zellulose, Zucker, Stärke) als Rückstand verbleiben. Das so gewonnene Extrakt bzw. Gemisch, bestehend aus einer Vielzahl von lipophilen Stoffen/Stoffklassen (z.B. a-Säuren, b-Säuren, Hopfenölen, Aromastoffen u.a.), läßt sich mittels Kohlendioxid-Hochdruckextraktion aufgrund des gleichen Lösungsverhaltens dieser Stoffe in Kohlendioxid nicht weiter in die einzelnen Stoffe oder Komponenten zerlegen bzw. in Fraktionen auftrennen.

Analog zu den Naturstoffen zeigen die untersuchten Polymer-Gemische ebenfalls ein ausgeprägtes lipophiles Verhalten, gegeben durch die gute Löslichkeit in Hexan oder bei einigen Polymeren sogar die volle Mischbarkeit mit Hexan. Der Fachmann mußte also davon ausgehen, daß Stoffgemische, welche vorwiegend aus lipophilen Komponenten bestehen und lipophile Eigenschaften aufweisen (beispielsweise in Hexan löslich sind), sich mittels Kohlendioxid-Hochdruckextraktion nicht weiter in ihre einzelnen Bestandteile oder Komponenten auftrennen lassen.

Es hat sich jedoch überraschenderweise gezeigt, daß eine Abtrennung der Monomere oder Hilfsstoffe aus dem Prepolymer mittels der Kohlendioxid-Hochdruckextraktion möglich ist.

Versuche haben ergeben, daß sich beispielsweise Monomere, Acrylate und Metacrylate, Aldehyde, Dioxane, niedrigmolekulare Ringester sowie Diisocynate (TDI, MDI, HDI, IPDI, H12MDI u.a.) nahezu restlos aus dem Prepolymerisat abtrennen lassen.

Darüber hinaus hat sich gezeigt, daß auch störende oligomere Synthesebestandteile, welche beispielsweise die physikalischen Eigenschaften bestimmter Polymere nachteilig beeinflussen, gemeinsam mit den oben genannten Monomeren entfernt werden können.

Besonders überraschend hat sich herausgestellt, daß insbesondere bei einem gemäß der Unteransprüche ausgestalteten Verfahren eine selektive Abtrennung der beteiligten Monomere in hoher Reinheit erreicht werden kann.

Vorzugsweise wird das Kohlendioxid in seinem thermodynamischen Zustand oberhalb seines kritischen Drucks und oberhalb seiner kritischen Temperatur verwendet. Der kritische Druck des Kohlendioxids beträgt 73,8 bar und die kritische Temperatur 31,06°C. Oberhalb des kritischen Drucks und der kritischen Temperatur ist das Lösungsvermögen des Kohlendioxids für die zu extrahierenden Monomere oder Hilfsstoffe besonders hoch.

Um das gesteigerte Lösungsvermögen des bezüglich Druck und Temperatur überkritischen Kohlendioxids auszunutzen, wird ein Verfahren bevorzugt, bei dem das Prepolymer und das Lösungsmittel, reines, trockenes Kohlendioxid mit einem Wassergehalt von unter 20 ppm, bei Drücken zwischen 100 bar und 320 bar zusammengeführt werden. Entsprechend wird ein Verfahren bevorzugt, bei der das Prepolymer und das Lösungsmittel bei Temperaturen zwischen 40°C und 80°C zusammengeführt werden. In dem gewählten Temperaturbereich besteht bereits das gesteigerte Lösungsvermögen des Kohiendioxids, eine Gefahr des Crackens von in dem Prepolymer enthaltenen Stoffen ist aber noch nicht gegeben.

Die Trocknung des handelsüblichen $CO_2$ erfolgt in der Weise, daß das gasförmige $CO_2$ zum Trocknen auf einen Taupunkt <- 50°C bei Gleichgewichtsdruck, beispielsweise auf - 70°C bei 14,5 Bar, abgekühlt wird und dann durch Sicagel oder ein Molekularsieb geleitet wird. Das so erhaltene, getrocknete $Co_2$ mit einem Wassergehalt von unter 20 ppm wird dann verflüssigt und kann dann mit dem Prepolymer zur Reaktion gebracht werden.

Weiterhin wird ein Verfahren bevorzugt, bei dem die in dem Kohlendioxid gelösten Monomere zusammen mit dem Kohlendioxid von dem Prepolymer getrennt werden, nachdem das Kohlendioxid zuvor zum Einleiten des Extraktionsprozesses mit dem Prepolymer in Kontakt gebracht wurde. Das Trennen des Kohlendioxids mit den darin gelösten Monomeren von dem Prepolymer kann beispielsweise dadurch geschehen, daß das mit Monomeren angereicherte Kohlendioxid abgeleitet wird, während gleichzeitig reines Kohlendioxid zugeführt wird, so daß sich schließlich das gereinigte Prepolymer in einer Kohlendioxidatmosphäre befindet. Das Kohlendioxid wirkt dabei als Schutzgas und verhindert, daß das gereinigte Prepolymer und die Monomere mit Wasser oder Sauerstoff in Berührung gerät.

Bei dem bevorzugten Verfahren werden die in dem Kohlendioxid gelösten Monomere abgeschieden, nachdem das Kohlendioxid mit den gelösten Monomeren von dem Prepolymer getrennt wurde. Auf diese Weise lassen sich sowohl weitestgehend reines Kohlendioxid als auch weitestegehend reine Monomere zurückgewinnen, die anschließend wiederverwertet werden können.

Das Abscheiden der Monomere wird vorzugsweise bei Drücken zwischen 20 und 80 bar durchgeführt. Die Temperatur liegt dabei vorzugsweise in einem Bereich zwischen -10°C und + 40°C. Bei den genannten Drücken und Temperaturen weist das Kohlendioxid ein erheblich geringeres Lösungsvermögen für die Monomere auf als bei den bevorzugten Extraktions-Drücken und Temperaturen, so daß die ursprünglich gelösten Monomere aus dem Kohlendioxid ausfallen. Die abgeschiedenen Monomere werden vorzugsweise zu Synthesezwecken wieder eingesetzt. Ebenso wird das Kohlendioxid nach dem Abscheiden der Monomere vorzugsweise zum Extrahieren weiterer Monomere wiederverwendet.

Das Zusammenführen von Prepolymer und Lösungsmittel und das Ableiten von Kohlendioxid mit den darin gelösten Monomeren wird vorzugsweise kontinuierlich durchgeführt. Hierzu werden das Lösungsmittel mit dem Kohlendioxid und das Prepolymer vorzugsweise im Gegenstromverfahren derart aneinander vorbeigeführt, daß sie eine möglichst große Kontaktfläche miteinander haben, so daß sich ein effizienter Extraktionsprozeß ergibt, der einen hohen Durchsatz ermöglicht.

Auch das Abscheiden der Monomere aus dem Kohlendioxid wird vorzugsweise kontinuierlich durchgeführt. Das dabei rückgewonnene Kohlendioxid kann zur weiteren Extraktion zurückgeführt werden, während das gewonnene Monomer zu der, der Extraktion vorgelagerten Synthesestufe des Prepolymeres, zurückgeführt werden kann. Auf diese Weise ergeben sich sowohl für das Kohlendioxid als auch für die Monomere geschlossene Kreisläufe, so daß zum Abtrennen der bei der Synthese organischer Polymere verwendete oder an der Polymerisationsreaktion beteiligten und im Prepolymer noch enthaltenen organischen Monomeren lediglich kontinuierlich Energie aufgewendet werden muß. Das Lösungsmittel und die extrahierten Stoffe befinden sich in einem Kreislaufprozeß. Es muß weder kontinuierlich Lösungsmittel zugesetzt werden, noch fallen kontinuierlich zu entsorgende Abfallstoffe an.

Die Erfindung erlaubt daher ein sehr kostengünstiges und umweltschonendes Abtrennen von bei der Synthese organischer Polymere verwendeten oder einer Polymerisationsreaktion beteiligten und im Prepolymer (Polymer) noch enthaltenen organischen Monomeren oder Hilfsstoffen. Das zu reinigende Prepolymer sollte bei der Extraktion vorzugsweise in flüssiger oder viskoser Form vorliegen.

Bei einem bevorzugten Verfahren werden Isocynate aus dem Prepolymer abgetrennt.

Ebenso wird ein Verfahren bevorzugt, bei dem Aldehyde, Dioxane, Ringester und/oder Glykole aus dem Prepolymer abgetrennt werden.

Bei einer bevorzugten Alternative des Verfahrens werden Acrylester und/oder Methacrylester aus dem Prepolymer abgetrennt.

Auch wird ein Verfahren bevorzugt, bei dem prozeßbedingt zugesetzte Vehikel, insbesondere Starter, Verdünner oder Stabilisatoren aus dem Prepolymer abgetrennt werden.

Das Verfahren soll nun anhand mehrerer Beispiele näher erläutert werden.

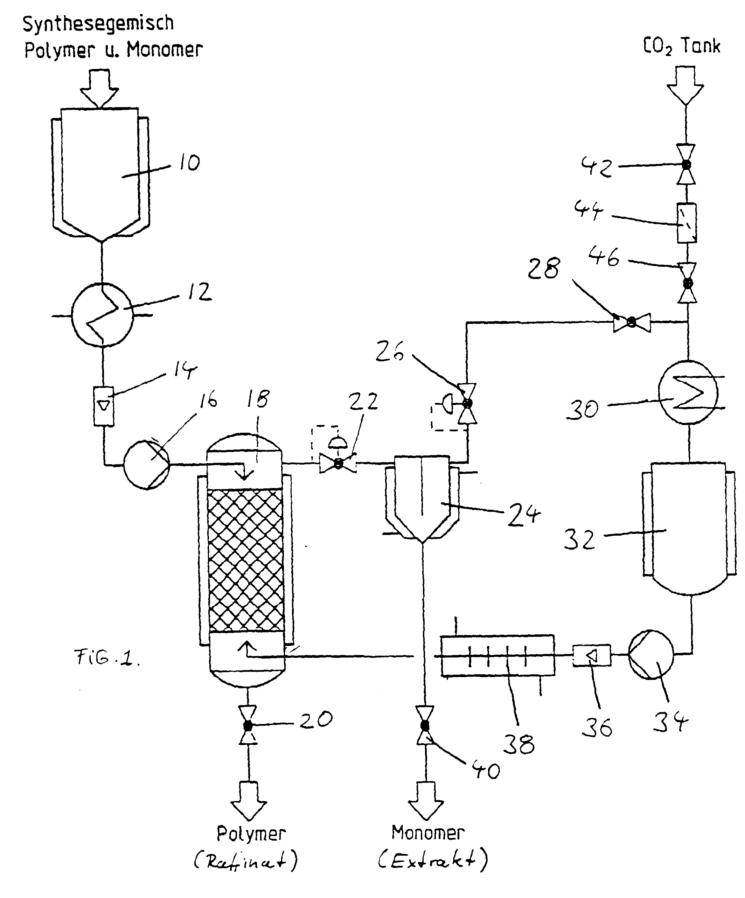

Die Figur zeigt eine Apparatur zur Hocndruckextraktion in schematischer Darstellung.

Bei der Apparatur zur Hochdruckextraktion sind ein Vorlagebehälter 10, ein erster Wärmetauscher 12, ein Durchflußmesser 14, eine Dosierpumpe 16, eine Trennkolonne 18 und ein Ablaßventil 20 hintereinandergeschaltet.

In dem Vorlagebehälter 10 befindet sich das Prepolymer der Synthese eines organischen mit den darin enthaltenen Monomeren oder Hilfsstoffen, also ein Gemisch aus Polymeren und Monomeren. Dieses Gemisch gelangt aus dem Vorlagebehälter 10 in den Wärmetauscher 12, wo es so temperiert wird, daß das Gemisch eine für die Extraktion geeignete Viskosität hat. Anschließend fließt das Gemisch durch den Durchflußmesser 14 und wird von der Dosierpumpe 16 der Trennkolonne 18 zugeführt.

In der Trennkolonne 18 findet die Extraktion statt. Das gereinigte Prepolymer der Polymersynthese (das Polymer) kann als Raffinat durch das Bodenablaßventil 20 der Trennkolonne 18 entnommen werden.

Zur Extraktion wird der Trennkolonne 18 kontinuierlich reines Lösungsmittel zugeführt, also reines, trockenes Kohlendioxid mit einem Wassergehalt von unter 20 ppm. Der Einlaß für das Lösungsmittel befindet sich im Bodenbereich der Trennkolonne, während sich der Einlaß für das Gemisch im oberen Bereich der Trennkolonne befindet. Dagegen befindet sich der Ablaß für das gereinigte Polymer im Bodenbereich der Trennkolonne und der Ablaß für das Lösungsmittel mit den darin gelösten Monomeren im oberen Bereich der Trennkolonne, so daß die Trennkolonne von dem Polymer und dem Lösungsmittel im Gegenstrom durchströmt wird. Dies trägt zu einer effektiven Extraktion bei. Außerdem ist die Trennkolonne 18 so aufgebaut, daß das Polymer und das Lösungsmittel innerhalb der Trennkolonne eine möglichst große Kontaktfläche miteinander haben.

Der Extraktions-Druck $P_E$ und die Extraktions-Temperatur $T_E$ in der Trennkolonne werden vorzugsweise so gewählt, daß sich das Kohlendioxid in seinem sowohl bezüglich des Drucks als auch bezüglich der Temperatur überkritischen thermodynamischen Zustand befindet. In diesem Zustand ist das Lösungsvermögen des Kohlendioxids für die zu extrahierenden Monomere oder Hilfsstoffe besonders hoch.

Für den Lösungsmittelkreislauf weist die Apparatur neben der bereits beschriebenen Trennkolonne 18 ein erstes Druckregelventil 22, einen Abscheider 24, ein zweites Druckregelventil 26, ein Kreislaufventil 28, einen Kohlendioxid-Verflüssiger 30, einen Kohlendioxid-Sammler 32, eine Flüssig-Kohlendioxid-Pumpe 34, einen Kohlendioxid-Durchflußmesser 36 und einen zweiten Wärmetauscher 38 auf. Zunächst wird mittels der Flüssig-Kohlendioxid-Pumpe 34 solange Kohlendioxid aus dem Kohlendioxid-Sammler 32 und durch den zweiten Wärmetauscher 38, in dem Kohlendioxid auf die Extraktionstemperatur $T_E$ gebracht wird, in die trennkolonne 18 gefördert, bis dort der Extraktionsdruck $P_E$ herrscht.

Ist der Extraktionsdruck $P_E$ errreicht, öffnet sich das erste Druckregelventil 22 und das Lösungsmittel (Kohlendioxid) mit den darin gelösten Monomeren kann aus der Trennkolonne durch das erste Druckregelventil 22 austreten. Dabei tritt nur soviel Lösungsmittel aus der Trennkolonne 18 aus, wie durch die Flüssig-Kohlendioxid-Pumpe 34 nachgefördert wird. Es ergibt sich also ein konstanter Extraktionsdruck $P_E$ bei einem kontinuierlichen Kohlendioxid-Durchsatz.

In dem ersten Druckregelventil 22 wird das aus der Trennkolonne 18 austretende Lösungsmittel auf einen niedrigeren Druck, den Abscheidedruck $P_A$, entspannt und gelangt anschließend in den beheizbaren Abscheider 24. Dort baut sich zunächst der Abscheidedruck $P_A$ auf. Ist dieser erreicht, öffnet sich das zweite Druckregelventil 26 und hält den Abscheidedruck $P_A$ im folgenden konstant.

Der Abscheider wird innerhalb eines Temperatur- und Druckbereiches betrieben, bei dem das Lösungsvermögen der Monomere oder Hilfsstoffe gegenüber den in der Trennkolonne 18 herrschenden Temperaturen und Drük-

ken erheblich vermindert ist. Dadurch fallen die Monomere oder Hilfsstoffe in dem Abscheider aus dem Lösungsmittel quantitativ aus und können durch ein Abscheiderbodenventil 40 als Extrakt ausgetragen werden und anschließend dem Synthese-Reaktor (nicht abgebildet) zurückgeführt werden.

Das gereinigte Lösungsmittel $CO_2$ strömt aus dem Abscheider 24 durch das zweite Druckregelventil 26 und das Kreislaufventil 28 zu dem Kohlendioxid-Verflüssiger 30.

In dem Kohlendioxid-Verflüssiger 30 wird das Kohlendioxid verflüssigt und anschließend in dem Kohlendioxid-Sammler 32 gesammelt. Von dort wird das flüssige Kohlendioxid von der Flüssig-Kohlendioxid-Pumpe 34 durch den Kohlendioxid-Durchflußmesser 36 und den zweiten Wärmetauscher 38 zurück in die Trennkolonne 18 gefördert. Dadurch ist der Kreislauf für das Lösungsmittel geschlossen.

In dem zweiten Wärmetauscher 38 wird das Kohlendioxid auf die erforderliche Extraktionstemperatur gebracht.

Mit Hilfe des ersten Druckregelventils 22 wird der Extraktionsdruck $P_E$ in der Trennkolonne 18 gehalten.

Entsprechend wird der erforderliche Druck $P_A$ in dem Abscheider 24 durch das zweite Druckregelventil 26 gehalten.

Zum Einbringen des trockenen Kohlendioxids in den Lösungsmittel-Kreislauf wird das Kohlendioxid bei geschlossenem Kreislaufventil 28 aus einem nicht abgebildeten Kohlendioxid-Tank über ein Zulaufventil 42 und ein Molekularsiebfilter 44 sowie über ein zweites Zulaufventil 46 und den Kohlendioxid-Verflüssiger 30 in den Kohlendioxid-Sammler 32 gefördert. Sobald sich die Verfahrensparameter eingestellt haben, wird das erste Zulaufventil 42, 46 geschlossen und das Kreislaufventil 28 geöffnet.

Das Molekularsiebfilter hat vorzugsweise einen Porendurchmesser von ungefähr 4 Å.

Die wesentlichen Verfahrensparameter sind der Extraktionsdruck $P_E$[bar] und die Extraktionstemperatur $T_E$ [°C] in der Trennkolonne 18 sowie der Abscheidedruck $P_A$[bar] und die Abscheidetemperatur $T_A$[°C] in dem Abscheider. Ein weiterer Verfahrensparameter ist das Verhältnis der Massenströme von Kohlendioxid und Rohstoff, also dem Prepolymer. Dieses Verhältnis wird im folgenden als Durchsatzkoeffizient bezeichnet.

## TABELLE 1

| Druck P [ bar ] | | Temperatur °C | | | | |
|---|---|---|---|---|---|---|
| | | 40 | 50 | 60 | 70 | 80 |
| 100 | Dichte $CO_2$ [g/cm³] | 0.68 | 0.45 | 0.31 | 0.26 | 0.23 |
| 150 | Dichte $CO_2$ [g/cm³] | 0.80 | 0.73 | 0.63 | 0.54 | 0.45 |
| 200 | Dichte $CO_2$ [g/cm³] | 0.85 | 0.80 | 0.74 | 0.68 | 0.61 |
| 250 | Dichte $CO_2$ [g/cm³] | 0.89 | 0.85 | 0.80 | 0.75 | 0.70 |
| 300 | Dichte $CO_2$ [g/cm³] | 0.92 | 0.88 | 0.84 | 0.80 | 0.76 |

In Tabelle 1 ist die Dichte von trockenem Kohlendioxid mit einem Wassergehalt von etwa 2,5 ppm bei verschiedenen Temperaturen und Drücken eingetragen, bei denen das erfindungsgemäße Verfahren je nach der Art der Monomere arbeitet. Für die Extraktion bevorzugte Parameterpaare von Extraktionsdruck $P_E$ und Extraktionstemperatur $T_E$ sind in der Tabelle dadurch gekennzeichnet, daß die entsprechenden Felder für die Kohlendioxid-Dichte farbig hinterlegt sind. So ergibt sich aus Tabelle 1, daß bei einem Extraktionsdruck von 150 bar Extraktionstemperaturen zwischen 50°C und 60°C besonders günstig sind, wobei das Kohlendioxid eine Dichte zwischen 0,63 g/cm³ und 0,73 g/cm³ hat. Bei einem Extraktionsdruck von 200 bar liegt die bevorzugte Extraktionstemperatur zwischen 50°C und 70°C und die Dichte des Kohlendioxids zwischen 0,68 g/cm³ und 0,8 g/cm³. Bei einem Extraktionsdruck von 250 bar wird eine Extraktionstemperatur zwischen 70°C und 80°C und eine dementsprechende Kohlendioxid-Dichte zwischen 0,7 g/cm$^3$ und 0,75 g/cm3 bevorzugt. Bei einem Extraktionsdruck von 300 bar sollte die Extraktionstemperatur in der Nähe von 80°C liegen, was einer Dichte des Kohlendioxids von 0,76 g/cm$^3$ entspricht.

Günstige Verfahrensparameter für den Abscheider sind ein Abscheidedruck $P_A$ von 55 bar und eine Abscheidetemperatur $T_A$ von 30°C. Die Dichte des Kohlendioxids liegt dabei bei 0,15 g/cm$^3$.

Es folgen einige Beispiele für durchgeführte Extraktionen.

Beispiel 1: Polyurethan

Ausgangsstoff sind durch Synthese gewonnene Polyurethan-Prepolymere, als Monomere ist HDI (Hexamethylen-1,6-Diisocyanat) enthalten. Das durch Synthese gewonnene Prepolymer enthält Polymere und Monomere (HDI) und wurde anschließend entsprechend dem erfindungsgemäßen Verfahren mit getrocknetem $CO_2$ gereinigt, um die Monomere (HDI) abzutrennen.

Verfahrensparameter:

| Lösungsmittel: | getrocknetes $CO_2$ (Wassergehalt: 2,5 ppm) |
|---|---|
| Extraktionsdruck $P_E$ | $P_E$ = 200 bar |
| Extraktionstemperatur $T_E$ | $T_E$ = 60 °C |
| Dichte $CO_2$, bei $P_E/T_E$ | = 0,74 g/cm$^3$ |
| Abscheidedruck $P_A$ | $P_A$ = 55 bar |
| Abscheidetemperatur $T_A$ | $T_A$ = 30 °C |
| Dichte $CO_2$, bei $P_A/T_A$ | = 0,15 g/cm$^3$ |
| Durchsatzkoeffizient | $= \dfrac{8 \text{ kg } CO_2/h}{1 \text{ kg Prepolymer}/h}$ |

Ergebnis:

TABELLE 2

| Zusammensetzung des Prepolymers vor der $CO_2$-Behandlung | Zusammensetzung des Prepolymers nach der $CO_2$-Behandlung | Reinheit des durch die $CO_2$-Behandlung gewonnenen Monomers |
|---|---|---|
| 800 g Polymer<br>200 g Monomer (HDI) | 799,50 g Polymer<br>0 g Monomer (HDI) * | 199,50 g Monomer (HDI)<br>Reinheit: 99,80% |
| 900 g Polymer<br>100 g Monomer (HDI) | 898,80 g Polymer<br>0 g Monomer (HDI) * | 99,50 g Monomer<br>Reinheit: 99,75% |
| 950 g Polymer<br>50 g Monomer (HDI) | 948,10 g Polymer<br>0 g Monomer (HDI) * | 49,85 g Monomer<br>Reinheit: 99,90% |
| 980 g Polymer<br>20 g Monomer (HDI) | 978,8 g Polymer<br>0 g Monomer (HDI) * | 19,95 g Monomer<br>Reinheit: 99,75% |
| 990 g Polymer<br>10 g Monomer (HDI) | 989,5 g Polymer<br>0 g Monomer (HDI) * | 9,80 g Monomer<br>Reinheit: 99,95% |

*Monomer nicht mehr nachweisbar

Beispiel 2: Acryl

Ausgangsstoff sind durch Synthese gewonnene Acryl-Prepolymere, als Monomere sind Acrylester und/oder Methacrylester sowie ETAC als Lösungsmittel enthalten. Das Synthesegemisch wurde anschließend entsprechend dem erfindungsgemäßen Verfahren mit getrocknetem $CO_2$ gereinigt, um die Monomere Acrylester und/oder Methacrylester von dem Prepolymer abzutrennen.

Verfahrensparameter:

| Lösungsmittel: | getrocknetes $CO_2$ (Wassergehalt: 2,5 ppm) |
|---|---|
| Extraktionsdruck $P_E$ | $P_E$ = 250 bar |
| Extraktionstemperatur $T_E$ | $T_E$ = 70 °C |
| Dichte $CO_2$, bei $P_E/T_E$ | = 0,75 g/cm$^3$ |
| Abscheidedruck $P_A$ | $P_A$ = 55 bar |
| Abscheidetemperatur $T_A$ | $T_A$ = 30 °C |
| Dichte $CO_2$, bei $P_A/T_A$ | = 0,15 g/cm$^3$ |
| Durchsatzkoeffizient | $= \dfrac{7,5 \text{ kgCO}_2/h}{1 \text{ kgPrepolymer/h}}$ |

Ergebnis:

TABELLE 3

| Zusammensetzung des Prepolymers vor der $CO_2$-Behandlung | Zusammensetzung des Prepolymers nach der $CO_2$-Behandlung | Reinheit des durch die $CO_2$-Behandlung gewonnenen Monomers |
|---|---|---|
| 950 g Polymer<br>50 g Monomer | 949,50 g Polymer<br>0 g Monomer* | 49,80 g Monomer<br>Reinheit: 99,56% |
| 960 g Polymer<br>40 g Monomer | 959,80 g Polymer<br>0 g Monomer* | 39,96 g Monomer<br>Reinheit: 99,53% |
| 970 g Polymer<br>30 g Monomer | 969,70 g Polymer<br>0 g Monomer* | 29,95 g Monomer<br>Reinheit: 99,9% |
| 980 g Polymer<br>20 g Monomer | 979,70 g Polymer<br>0 g Monomer* | 19,89 g Monomer<br>Reinheit: 99,80% |

*Monomer nicht mehr nachweisbar

Beispiel 3: Polyesterdiolen

Ausgangsstoff sind durch Synthese gewonnene Polyesterdiolen-Prepolymere, als Monomer ist Dioxan eingesetzt. Das durch Synthese gewonnene Prepolymer enthält Polymere und Monomere (Dioxan) und wurde anschließend entsprechend dem erfindungsgemäßen Verfahren mit getrocknetem $CO_2$ gereinigt, um die Monomere (Dioxan) abzutrennen. Das Ziel ist es, ein geruchloses Endprodukt herzustellen.

Verfahrensparameter:

| Lösungsmittel: | getrocknetes $CO_2$ (Wassergehalt:2,5 ppm) |
|---|---|
| Extraktionsdruck $P_E$ | $P_E$ = 150 bar |
| Extraktionstemperatur $T_E$ | $T_E$ = 50 °C |
| Dichte $CO_2$, bei $P_E/T_E$ | = 0,73 g/cm$^3$ |
| Abscheidedruck $P_A$ | $P_A$ = 55 bar |

(fortgesetzt)

| | |
|---|---|
| Abscheidetemperatur $T_A$ | $T_A = 30\ °C$ |
| Dichte $CO_2$, bei $P_A/T_A$ | $= 0,15\ g/cm^3$ |
| Durchsatzkoeffizient | $= \dfrac{9\ kgCO_2/h}{1\ kgPrepolymer/h}$ |

Ergebnis:

TABELLE 4

| Zusammensetzung des Prepolymers vor der $CO_2$-Behandlung | Zusammensetzung des Prepolymers nach der $CO_2$-Behandlung | Reinheit des durch die $CO_2$Behandlung gewonnenen Monomers |
|---|---|---|
| 950 g Polymer<br>50 g Monomer (Dioxan) | 949,80 g Polymer<br>0 g Monomer (Dioxan) * | 49,89 g Monomer (Dioxan)<br>Reinheit: 99,85% |
| 990 g Polymer<br>10 g Monomer (Dioxan) | 989,75 g Polymer<br>0 g Monomer (Dioxan) * | 9,95 g Monomer (Dioxan)<br>Reinheit: 99,79% |

* Monomer nicht mehr nachweisbar

Beispiel 4:

Es wurden eingesetzt für die Synthese von Polymeren als "VEHIKEL" THF und MEK (Tetrahydrofuran und Methyl-Ethylketon). Das durch Synthese gewonnene Prepolymer enthält Polymere und VEHIKEL (THF, MEK) und wurde anschließend entsprechend dem erfindungsgemäßen Verfahren mit $CO_2$ gereinigt, um die VEHIKEL (THF, MEK) abzutrennen.

Verfahrensparameter:

| | |
|---|---|
| Lösungsmittel: | getrocknetes $CO_2$ (Wassergehalt: 2,5 ppm) |
| Extraktionsdruck $P_E$ | $P_E = 250\ bar$ |
| Extraktionstemperatur $T_E$ | $T_E = 70\ °C$ |
| Dichte $CO_2$, bei $P_E/T_E$ | $= 0,74\ g/cm^3$ |
| Abscheidedruck $P_A$ | $P_A = 55\ bar$ |
| Abscheidetemperatur $T_A$ | $T_A = 30\ °C$ |
| Dichte $CO_2$, bei $P_A/T_A$ | $= 0,15\ g/cm^3$ |
| Durchsatzkoeffizient | $= \dfrac{5\ kgCO_2/h}{1\ kgPrepolymer/h}$ |

Ergebnis:

TABELLE 5

| Zusammensetzung des Prepolymers vor der $CO_2$-Behandlung | Zusammensetzung des Prepolymers nach der $CO_2$-Behandlung | Reinheit des durch die $CO_2$-Behandlung gewonnenen Monomers |
|---|---|---|
| 800 g Polymer | 799,50 g Polymer | 199,85 g Monomer (THF) |

TABELLE 5   (fortgesetzt)

| Zusammensetzung des Prepolymers vor der $CO_2$-Behandlung | Zusammensetzung des Prepolymers nach der $CO_2$-Behandlung | Reinheit des durch die $CO_2$-Behandlung gewonnenen Monomers |
|---|---|---|
| 200 g Monomer (THF) | 0 g Monomer (THF) * | Reinheit: 99,85% |
| 900 g Polymer 100 g Monomer (MEK) | 899,10 g Polymer 0 g Monomer (MEK) * | 99,85 g Monomer (MEK) Reinheit: 99,793% |
| 970 g Polymer 30 g Monomer (THF) | 969,89 g Polymer 0 g Monomer (THF) * | 29,85 g Monomer (THF) Reinheit: 99,35% |
| 980 g Polymer 20 g Monomer (MEK) | 979,10 g Polymer 0 g Monomer (MEK) * | 19,79 g Monomer (MEK) Reinheit: 99,40% |

*Monomer nicht mehr nachweisbar

Die in den Beispielen 1 bis 4 aufgeführten Versuchsergebnisse belegen die mit dem Verfahren erzielbaren Erfolge beim Abtrennen von bei der Synthese organischer Polymere verwendeten oder an der Polymerisationsreaktion beteiligten und im Prepolymer (Polymer) noch enthaltenen organischen Monomeren oder Hilfsstoffen.

Um die Wirksamkeit des erfindungsgemäßen Verfahrens zu demonstrieren, wurde ein Vergleichsversuch durchgeführt: Es wurde der Versuch gemäß Beispiel 1 durchgeführt und als Lösungsmittel wurde dabei $CO_2$ mit einem Wassergehalt von 70 ppm eingesetzt. Die Reinheit des durch die $CO_2$-Behandlung gewonnenen Monomers HDI (Hexamethylen-1,6-Diisocyanat) wurde zu 91% gemessen.

Vergleichsversuch:

Ausgangsstoff sind durch Synthese gewonnene Polyurethan-Prepolymere, als Monomere ist HDI (Hexarnethylen-1,6-Diisocyanat) enthalten. Das durch Synthese gewonnene Prepolymer enthält Polymere und Monomere (HDI) und wurde anschließend mit nichtgetrocknetem $CO_2$ mit einem Wassergehalt von 70 ppm) gereinigt, um die Monomere (HDI) abzutrennen.

Verfahrensparameter:

| Lösungsmittel: | nichtgetrocknetes $CO_2$ (Wassergehalt: 70 ppm) |
|---|---|
| Extraktionsdruck $P_E$ | $P_E$ = 200 bar |
| Extraktionstemperatur $T_E$ | $T_E$ = 60 °C |
| Dichte $CO_2$, bei $P_E/T_E$ | = 0,74 g/cm$^3$ |
| Abscheidedruck $P_A$ | $P_A$ = 55 bar |
| Abscheidetemperatur $T_A$ | $T_A$ = 30 °C |
| Dichte $CO_2$, bei $P_A/T_A$ | = 0,15 g/cm$^3$ |

Ergebnis:

Das durch die $CO_2$-Behandlung gewonnene Monomer (HDI) besitzt eine Reinheit von 91%.

**Patentansprüche**

1.   Verfahren zur Abtrennung von organischen Monomeren oder Hilfsstoffen, die bei der Synthese organischer Polymere verwendet werden oder an der Polymerisationsreaktion beteiligt sind, aus dem durch die Synthese gewonnenen Prepolymer, wobei die Monomere oder Hilfsstoffe aus dem Prepolymer mittels verdichtetem Kohlendioxid als Lösungsmittel extrahiert werden, und wobei das Kohlendioxid in seinem thermodynamischen Zustand oberhalb seines kritischen Drucks und oberhalb seiner kritischen Temperatur verwendet wird, dadurch gekennzeichnet, daß das Kohlendioxid auf einen Wassergehalt unter 20 ppm getrocknet wird, bevor es mit dem Prepolymer zusammengebracht wird.

2. Verfahren nach Anspruch 1,
dadurch gekennzeichnet, daß das Kohlendioxid auf einen Wassergehalt unter 2,5 ppm getrocknet wird.

3. Verfahren nach einem der vorstehenden Ansprüche,
dadurch gekennzeichnet, daß das Prepolymer und das getrocknete $CO_2$ bei Drücken zwischen 150 bar und 300 bar zusammengeführt wird.

4. Verfahren nach einem der vorstehenden Ansprüche,
dadurch gekennzeichnet, daß das Prepolymer und das getrocknete $CO_2$ bei Temperaturen zwischen 40°C und 80°C zusammengeführt wird.

5. Verfahren nach einem der vorstehenden Ansprüche,
dadurch gekennzeichnet, daß das Kohlendioxid vor der Extraktion zum Trocknen durch ein Molekularsieb oder Siligagel geleitet wird.

6. Verfahren nach einem der vorstehenden Ansprüche,
dadurch gekennzeichnet, daß das gasförmige $CO_2$ zum Trocknen auf einen Taupunkt <- 50°C bei Gleichgewichtsdruck abgekühlt wird und dann durch Silicagel oder ein Molekularsieb geleitet wird.

7. Verfahren nach einem der vorstehenden Ansprüche,
dadurch gekennzeichnet, daß die in dem trockenen Kohlendioxid gelösten Monomere zusammen mit dem Kohlendioxid von dem Prepolymer getrennt werden.

8. Verfahren nach Anspruch 7,
dadurch gekennzeichnet, daß die in dem getrockneten Kohlendioxid gelösten Monomere abgeschieden werden, nachdem das Kohlendioxid mit den gelösten Monomeren von dem Prepolymer getrennt wurde.

9. Verfahren nach Anspruch 8,
dadurch gekennzeichnet, daß das Abscheiden der Monomere bei Drücken zwischen 20 und 80 bar durchgeführt wird.

10. Verfahren nach Anspruch 8 oder 9,
dadurch gekennzeichnet, daß das Abscheiden der Monomere bei Temperaturen zwischen -10°C und +40°C durchgeführt wird.

11. Verfahren nach einem der Ansprüche 8 bis 10,
dadurch gekennzeichnet, daß die abgeschieden Monomere zu Synthesezwecken wiedereingesetzt werden.

12. Verfahren nach einem der vorstehenden Ansprüche,
dadurch gekennzeichnet, daß das getrocknete Kohlendioxid nach dem Abscheiden der Monomere zum Abtrennen weiterer Monomere wiederverwendet wird.

13. Verfahren nach einem der vorstehenden Ansprüche,
dadurch gekennzeichnet, daß Zusammenführen von Prepolymer und getrocknetem Kohlendioxid und das Ableiten von Kohlendioxid mit den darin gelösten Monomeren kontinuierlich durchgeführt wird.

14. Verfahren nach einem der vorstehenden Ansprüche,
dadurch gekennzeichnet, daß die Monomere aus flüssigem oder viskosen Prepolymer abgetrennt werden.

15. Verfahren nach einem der vorstehenden Ansprüche,
dadurch gekennzeichnet, daß Isocynate aus dem Prepolymer abgetrennt werden.

16. Verfahren nach einem der vorstehenden Ansprüche,
dadurch gekennzeichnet, daß Aldehyde, Dioxane, Ringeester und/oder Glykole aus dem Prepolymer abgetrennt werden.

**17.** Verfahren nach einem der vorstehenden Ansprüche,
dadurch gekennzeichnet, daß Acrylester und/oder Methacrylester aus dem Prepolymer abgetrennt werden.

**18.** Verfahren nach einem der vorstehenden Ansprüche,
dadurch gekennzeichnet, daß prozeßbedingt zugesetzte Vehikel, insbesondere Starter, Verdünner oder Stabilisatoren aus dem Prepolymer abgetrennt werden.

**Claims**

**1.** Process for the removal of organic monomers or auxiliaries which are used in the synthesis of organic polymers or participate in the polymerization reaction from the prepolymer obtained by the synthesis, the monomers or auxiliaries being extracted from the prepolymer by means of compressed carbon dioxide as a solvent, and the carbon dioxide being used in its thermodynamic state above its critical pressure and above its critical temperature, characterized in that the carbon dioxide is dried to a water content of below 20 ppm before it is brought together with the prepolymer.

**2.** Process according to claim 1,
characterized in that the carbon dioxide is dried to a water content of below 2.5 ppm.

**3.** Process according to one of the preceding claims,
characterized in that the prepolymer and the dried $CO_2$ are brought together under pressures of between 150 bar and 300 bar.

**4.** Process according to one of the preceding claims,
characterized in that the prepolymer and the dried $CO_2$ are brought together at temperatures of between 40°C and 80°C.

**5.** Process according to one of the preceding claims,
characterized in that the carbon dioxide is passed through a molecular sieve or silica gel before the extraction for drying.

**6.** Process according to one of the preceding claims,
characterized in that the gaseous $CO_2$ for the drying is cooled to a dew point of $< - 50$°C under the equilibrium pressure and is then passed through silica gel or a molecular sieve.

**7.** Process according to one of the preceding claims,
characterized in that the monomers dissolved in the dry carbon dioxide are separated from the prepolymer together with the carbon dioxide.

**8.** Process according to claim 7,
characterized in that the monomers dissolved in the dried carbon dioxide are separated off after the carbon dioxide with the dissolved monomers has been separated from the prepolymer.

**9.** Process according to claim 8,
characterized in that the monomers are separated off under pressures of between 20 and 80 bar.

**10.** Process according to claim 8 or 9,
characterized in that the monomers are separated off at temperatures of between -10°C and +40°C.

**11.** Process according to one of claims 8 to 10,
characterized in that the monomers separated off are re-used for synthesis purposes.

**12.** Process according to one of the preceding claims,
characterized in that after the monomers have been separated off, the dried carbon dioxide is re-used for removal of further monomers.

**13.** Process according to one of the preceding claims,

characterized in that the bringing together of the prepolymer and dried carbon dioxide and the removal of the carbon dioxide with the monomers dissolved therein are carried out continuously.

14. Process according to one of the preceding claims,
characterized in that the monomers are removed from liquid or viscous prepolymer.

15. Process according to one of the preceding claims,
characterized in that isocyanates are removed from the prepolymer.

16. Process according to one of the preceding claims,
characterized in that aldehydes, dioxanes, cyclic esters and/or glycols are removed from the prepolymer.

17. Process according to one of the preceding claims,
characterized in that acrylic esters and/or methacrylic esters are removed from the prepolymer.

18. Process according to one of the preceding claims,
characterized in that vehicles added because of the process, in particular initiators, diluents or stabilizers, are removed from the prepolymer.

**Revendications**

1. Procédé de séparation de monomères organiques ou d'adjuvants qui sont utilisés pour la synthèse de polymères organiques ou qui participent à la réaction de polymérisation d'avec le prépolymère obtenu par la synthèse, dans lequel les monomères ou les adjuvants sont extraits du prépolymère en utilisant comme solvant du dioxyde de carbone comprimé et dans lequel le dioxyde de carbone est utilisé dans son état thermodynamique au-dessus de sa pression critique et au-dessus de sa température critique, caractérisé en ce que le dioxyde de carbone est séché à une teneur en eau inférieure à 20 ppm avant d'être mis en contact avec le prépolymère.

2. Procédé selon la revendication 1, caractérisé en ce que le dioxyde de carbone est séché à une teneur en eau inférieure à 2,5 ppm.

3. Procédé selon l'une des revendications précédentes, caractérisé en ce que le prépolymère et le $CO_2$ séché sont mis en contact à des pressions de 150 bars à 300 bars.

4. Procédé selon l'une des revendications précédentes, caractérisé en ce que le prépolymère et le $CO_2$ séché sont mis en contact à des températures de 40 °C à 80 °C.

5. Procédé selon l'une des revendications précédentes, caractérisé en ce que, avant l'extraction, on fait passer le dioxyde de carbone à travers un tamis moléculaire ou du gel de silice afin de le sécher.

6. Procédé selon l'une des revendications précédentes, caractérisé en ce que, pour le séchage, on refroidit le $CO_2$ gazeux à un point de rosée inférieur à-50 °C à la pression d'équilibre et ensuite on le fait passer à travers du gel de silice ou un tamis moléculaire.

7. Procédé selon l'une des revendications précédentes, caractérisé en ce que les monomères dissous dans le dioxyde de carbone sec sont séparés du prépolymère ensemble avec le dioxyde de carbone.

8. Procédé selon la revendication 7, caractérisé en ce que les monomères dissous dans le dioxyde de carbone sec sont extraits après que le dioxyde de carbone avec les monomères dissous a été séparé du prépolymère.

9. Procédé selon la revendication 8, caractérisé en ce que l'extraction du monomère se fait à des pressions de 20 à 80 bars.

10. Procédé selon la revendication 8 ou la revendication 9, caractérisé en ce que l'extraction du monomère se fait à des températures de -10 °C à +40 °C.

11. Procédé selon l'une des revendications 8 à 10, caractérisé en ce que les monomères extraits sont réutilisés à des fins de synthèse.

12. Procédé selon l'une des revendications précédentes, caractérisé en ce que, après extraction des monomères, le dioxyde de carbone séché est réutilisé pour la séparation d'autres monomères.

13. Procédé selon l'une des revendications précédentes, caractérisé en ce que la mise en contact du prépolymère et du dioxyde de carbone séché et l'évacuation du dioxyde de carbone contenant des monomères dissous s'effectue de manière continue.

14. Procédé selon l'une des revendications précédentes, caractérisé en ce que les monomères sont séparés d'un prépolymère liquide ou visqueux.

15. Procédé selon l'une des revendications précédentes, caractérisé en ce que des isocyanates sont séparés du prépolymère.

16. Procédé selon l'une des revendications précédentes, caractérisé en ce que des aldéhydes, des dioxanes, des esters cycliques et/ou des glycols sont séparés du prépolymère.

17. Procédé selon l'une des revendications précédentes, caractérisé en ce que des esters acryliques et/ou des esters méthacryliques sont séparés du prépolymère.

18. Procédé selon l'une des revendications précédentes, caractérisé en ce que des véhicules conditionnés par le procédé, notamment des amorceurs, des diluants ou des stabilisants, sont séparés du prépolymère.

Synthesegemisch
Polymer u. Monomer

CO₂ Tank

FiG.1.

Polymer
(Refinat)

Monomer
(Extrakt)